# EUROPÄISCHE PATENTSCHRIFT

(11) **EP 0 879 163 B1**
(45) Veröffentlichungstag und Bekanntmachung des Hinweises auf die Patenterteilung: **14.06.2000**
(21) Anmeldenummer: 97903282.8
(22) Anmeldetag: 14.02.1997
(51) Int. Cl.: B60T 8/28

(54) **ELEKTRONISCH GESTEUERTER BREMSKRAFTVERTEILER FÜR KRAFTFAHRZEUGE**
ELECTRONICALLY CONTROLLED MOTOR VEHICLE BRAKING FORCE DISTRIBUTOR
REPARTITEUR DE FREINAGE A COMMANDE ELECTRONIQUE POUR AUTOMOBILES

(30) Priorität: 15.02.1996 DE 19605552
(43) Veröffentlichungstag der Anmeldung: 25.11.1998
(73) Patentinhaber: Continental Teves AG & Co. oHG, 60488 Frankfurt (DE)
(72) Erfinder: FEIGEL, Hans-Jörg, D-61191 Rosbach (DE); BLECKMANN, Hans, W., D-61231 Bad Nauheim (DE)
(74) Vertreter: Blum, Klaus-Dieter, Dipl.-Ing.
(86) Internationale Anmeldenummer: EP9700695
(87) Internationale Veröffentlichungsnummer: WO9729934

(56) Entgegenhaltungen:
- DE-A- 3 301 948
- DE-A- 4 417 935
- FR-A- 2 684 946
- US-A- 5 217 287

## Beschreibung

Die Erfindung betrifft einen elektronisch gesteuerten Bremskraftverteiler für Kraftfahrzeuge nach dem Oberbegriff des Patentanspruchs 1.

Ein derartiger Bremskraftverteiler ist bereits aus der DE-OS 33 01 948 bekannt. Bei dieser Bremsanlage ist in dem zu den Hinterradbremsen führenden Druckmittelweg ein elektromagnetisch betätigbares, stromlos geschlossenes Ventil eingefügt. Bei jedem Bremsvorgang wird dieses Ventil mit Hilfe einer variablen Impulsfolge auf Durchlaß geschaltet, wobei sich an den Hinterrädern ein Radschlupf einstellt, der auf einen vorgegebenen Prozentsatz des Vorderradschlupfes begrenzt ist. Sind die Bremskreise diagonal aufgeteilt, so liegt auch im Druckmittelweg zu der zweiten Hinterradbremse ein gleichartiges oder ein in Abhängigkeit von dem Druck in der Hinterradbremse des ersten Kreises hydraulisch gesteuertes Ventil. Bei Ausfall der Stromversorgung ist bei dieser bekannten Anlage nur noch eine Abbremsung der Vorderräder möglich.

Der Erfindung liegt daher die Aufgabe zugrunde, diesen Nachteil zu vermeiden und mit einfachen, funktionssicheren Mitteln unter guter Kraftschlußausnutzung zwischen Fahrbahn und den Hinterrädern einen elektronisch gesteuerten Bremskraftverteiler zu entwickeln, mit dem auch bei einer Störung in den elektrischen Bauteilen oder Schaltkreisen die Hinterräder wirkungsvoll zur Abbremsung des Fahrzeugs beitragen können.

Diese Aufgabe wird erfindungsgemäß für einen Bremskraftverteiler der gattungsbildenden Art mit den kennzeichnenden Merkmalen des Patentanspruchs 1 gelöst. Weitere Merkmale, Vorteile und Anwendungsmöglichkeiten der Erfindung gehen im nachfolgenden aus den Unteransprüchen sowie aus einer Beschreibung mehrerer Ausführungsbeispiele hervor.

Es zeigen:
- Fig. 1: eine erste Ausführungsform eines elektronisch gesteuerten Bremskraftverteilers mit elektrohydraulischer Blockiervorrichtung,
- Fig. 2: eine weitere zweckmäßige Ausführungsform eines elektronisch gesteuerten Bremskraftverteilers mit elektromechanischer Blockiervorrichtung.

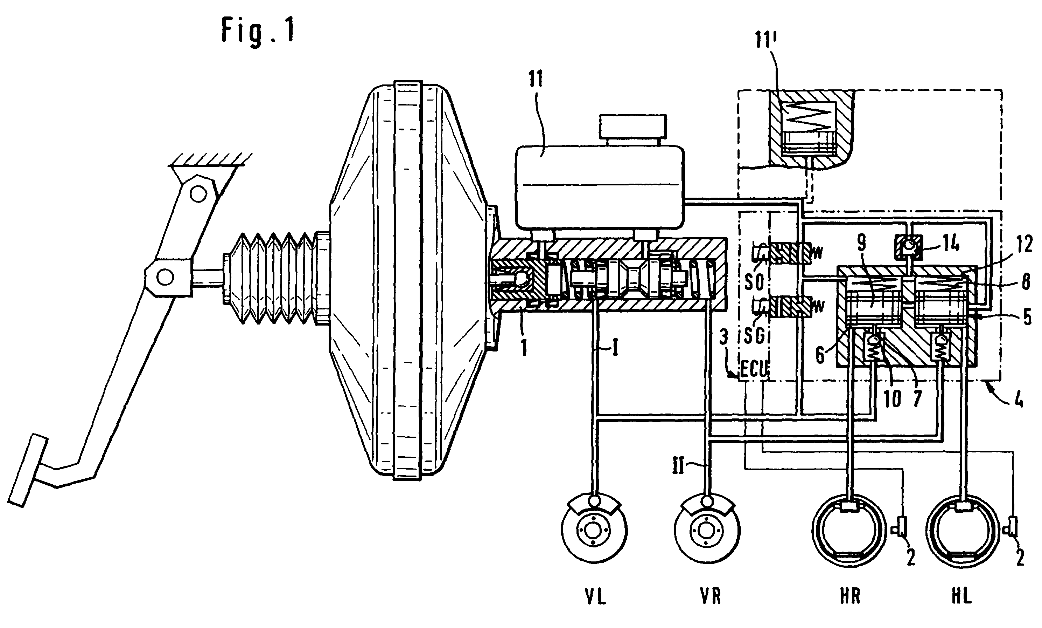

Die Fig. 1 zeigt in schematischer Darstellung ein pumpenloses Zweikreis-Bremssystem in Diagonalkreisaufteilung für Kraftfahrzeuge, das zwischen dem Bremsdruckgeber 1 und den Hinterradbremsen HR, HL der beiden Bremskreise I, II eine Ventil- und Aktuatorvorrichtung in einem Gehäuse 4 aufweist, die zur Hinterachs-Bremsdruckbeeinflussung mit einem in der Grundstellung stromlos offenen Magnetventil SO und einem stromlos geschlossenen Sperrventil SG für beide Hinterrad-Bremskreise I, II ausgerüstet ist. Das stromlos geschlossene Sperrventil SG ist wirkungsmäßig unabhängig vom stromlos offenen Magnetventil SO beispielhaft am Bremskreis I angeschlossen. Das stromlos offene Magnetventil SO ist hingegen in einer Leitungsverbindung eingesetzt, die einen Druckmittelvorratsbehälter 11 mit zwei Kammern 12 der Aktuatorvorrichtung verbindet, die normalerweise mit dem Druckmittel des Vorratsbehälters 11 befüllt sind. Beide Kammern 12 befinden sich in Twinanordnung innerhalb eines Gehäuses 4, in denen zur Betätigung von in den Hinterachs-Bremskreisen I, II angeordneten Ventilen 10 Hubkolben 9 geführt sind. Die Hubkolben 9 halten die als Rückschlagventile ausgeführten Ventile 10 unter der Wirkung von in den Kammern 12 angeordneten Druckfedern 8 in Offenstellung. Die Rückschlagventile stützen sich über jeweils einen Stößel an den Stirnflächen der Hubkolben 9 ab, wobei zwischen den Hubkolben 9 und den Ventilen 10 jeweils im Bereich der Bohrungsstufe im Gehäuse die Ventilsitze 7 der Ventile 10 angeordnet sind und durch deren Ventilsitzöffnungen die Stößel der Ventile 10 zu den Hubkolben 9 ragen. Jeweils zwischen dem Ventilsitz 7 und dem Hubkolben 9 befindet sich ein variabler Speicherraum 6, über den bei geöffnetem Ventil 10 jeweils eine hydraulische Verbindung eines Bremskreises I,II zwischen dem Bremsdruckgeber 1 und einer Hinterradbremse HR, HL besteht. Die Kammern 12, die mittels eines in der Grundstellung offengeschalteten Magnetventils SO an den Druckmittelvorratsbehälter 11 angeschlossen sind, bilden bei geschlossenem Magnetventil SO eine hydraulische Blockiervorrichtung für die als Aktuator wirksamen Hubkolben 9. Das die Kammern 12 vom Bremsdruckgeber 1 trennende Sperrventil SG gewährleistet einen erneuten Wiederaufbau von Bremsdruck in den Hinterradbremsen HR, HL nach einem Bremsdruckabbau in den Hinterradbremsen HR, HL, wenn sich die Hubkolben 9 entgegen der Wirkung der Druckfedern 8 in ihrer von den Ventilen 10 entfernten Stellung befinden. Sobald durch die Betätigung des Bremsdruckgebers 1 der Bremsdruck über das elektromagnetisch offengeschaltete Sperrventil SG in die Kammern 12 gelangt, nehmen die Hubkolben 9 ihre die Ventile 10 öffnende Grundstellung ein, womit sich der Druck des Bremsdruckgebers 1 über die Speicherräume 6 zu den Hinterradbremsen HR, HL fortpflanzen kann. Um ein unerwünschtes Abströmen von Druckmittel des Bremsdruckgebers 1 in den Druckmittelvorratsbehälter 11 zu verhindern, befindet sich das Magnetventil SO in Sperrstellung, solange das Sperrventil SG die Kammern 12 mit dem Bremsdruckgeber 1 verbindet.

Aus Figur 1 geht hervor, daß bei Diagonalaufteilung der Bremskreise I, II die beiden nach dem Plunger-Konzept ausgeführten Aktuatoren 5 in Twinanordnung zusammen mit dem Magnetventil SO und dem Sperrventil SG in einem Gehäuse 4 angeordnet sind. An dem Gehäuse 4 befindet sich überdies in schematischer Darstellung eine Steuer- und Auswerteelektronik 3 in modularer Anordnung. Wahlweise kann jedoch infolge des überschaubaren Bremsanlagenaufbaus der Bremsdruckgeber 1 mit der als elektronisches Hinterachsbremsdruckregelsystem im Gehäuse 4 zusammengefaßten Baugruppe eine integrale Einheit bilden.

Im Ausführungsbeispiel nach Fig. 1 sind zum Zwecke der elektronischen Hinterachsbremsdruckbeeinflussung Sensoren 2 den Hinterrädern zugeordnet, deren Ausgangssignale als Eingangssignale die Drehgeschwindigkeit bzw. Drehverzögerung der Hinterräder an die Auswerte- und Steuerelektronik 3 weiterleiten. Alternativ und auch als Ergänzung zu den Sensoren 2 kann am Bremsdruckgeber 1 ein die Betätigung der Arbeitskolben erfassender Wegschalter vorgesehen sein, auf den das Beschreibungsbeispiel im nachfolgenden jedoch nicht näher Bezug nimmt.

Im nachfolgenden wird über die schaltungstechnische Anordnung der Einzelheiten hinaus auf die Funktionsweise der Erfindung eingegangen. Das Bremssystem ist derart ausgelegt, daß der Bremsdruckaufbau in allen den Bremskreisen I, II zugeordneten Radbremsen VL, VR, HR, HL ausschließlich in Abhängigkeit des im Bremsdruckgeber 1 erzeugten Bremsdrucks erfolgt. In der Fig. 1 ist die Bremslösestellung gezeigt, in der ein Druckausgleich zwischen den Radbremsen HR, HL der Hinterachse über das vom federkraftbeaufschlagten Hubkolben 9 geöffnete Ventil 10 zum Bremsdruckgeber 1 und damit zum Druckmittelvorratsbehälter 11 erfolgt. Die Radbremsen VL, VR der Vorderachse weisen eine direkte Druckmittelverbindung zum Bremsdruckgeber 1 entsprechend der abbildungsgemäßen Bremskreisanordnung auf. Bei Betätigung des Bremsdruckgebers 1 und Überschreiten einer zulässigen Verzögerungsschwelle des Fahrzeugs, wird im Gegensatz zu der Darstellung nach Fig. 1 durch die Auswerte- und Steuerelektronik 3 das in Grundstellung geöffnete Magnetventil SO in seiner Schließstellung geschaltet. Damit ist ein ursprünglich vom Druckmittelvorratsbehälter 11 den beiden Kammern 12 zur Verfügung gestelltes Druckmittelvolumen in den Kammern 12 eingespannt, womit die Hubkolben 9 in der abbildungsgemäßen Grundstellung verharren, in der die offenen Ventile 10 eine ungehinderte Druckmittelverbindung über die Speicherräume 6 zu den Hinterradbremsen HR, HL ermöglichen. Der Hinterradbremsdruck entspricht dem Vorderradbremsdruck und kann solange erhöht werden, bis die Drehbeschleunigung eines Hinterrades einen zulässigen Grenzwert überschreitet, wodurch infolge der Signalverarbeitung in der Auswerte- und Steuerelektronik 3 das stromlos offene Magnetventil SO wieder in seine Durchlaßstellung gebracht wird. Damit wird die Blockierwirkung auf den Hubkolben 9 aufgehoben und die Ventile 10 geschlossen, sobald sich die Hubkolben 9 von den Stößeln der Ventile 10 entfernt haben. Mit dem Schließen der Ventile 10 und dem Zurückfahren der Hubkolben 9 in Richtung der Druckfedern 8 vergrößert sich gleichzeitig das Volumen in den Speicherräumen 6, so daß zum Zweck des Druckabbaus in den Hinterradbremsen das Druckmittelvolumen der Hinterradbremsen HR, HL in die erweiterten Speicherräume 6 entweicht. Der Druckabbau und damit das Zurückweichen der Hubkolben 9 erfolgt dann, wenn der Blockierdruck an den Hinterradbremsen HR, HL vom Betrage her höher liegt als der Vorspanndruck der Druckfedern 8 in den Kammern 12. Der Vorspanndruck der Druckfedern 8 ist so dimensioniert, daß dieser unterhalb der idealen Bremsdruckverteilerkennlinie des unbeladenen Fahrzeugs liegt. Daraus folgt, daß ein Bremsdruckabbau in den Hinterradbremsen nur dann nicht möglich ist, wenn die Vorderräder entsprechend ihrer Auslegung auch blockieren. Damit unterscheidet sich der Erfindungsgegenstand hinsichtlich seiner Funktion nicht von den bisher bekannten konventionellen Bremsdruckreglern. Bei Blockierdrücken in den Hinterradbremsen HL, HR, die über dem Vorspanndruck der Druckfedern 8 liegen, kann der Hinterradbremsdruck bis auf den maximalen Vorspanndruck der Druckfedern 8 abgebaut werden. Damit erfolgt bei einem Ausfall der elektrischen Energieversorgung, die zu einer Inaktivität des Magnetventils SO und des Sperrventils SG führen würde, eine Reduzierung des Hinterradbremsdruckes auf den in der Regel fern der Blockierschwelle ausgelegten Vorspanndruck der Druckfedern 8. Bei Betätigung des Bremsdruckgebers 1 können sodann die Ventile 10 durch das Zurückweichen der Hubkolben 9 die hydraulische Verbindung zu den Hinterradbremsen HR, HL trennen und es stellt sich dort bei ausgefallener Elektronik maximal der Vorspanndruck im Sinne einer Druckbegrenzerfunktion ein. Unter der Voraussetzung einer intakten Elektrik bzw. Elektronik erfolgt ein erneuter Druckaufbau in den Hinterradbremsen HR, HL durch die elektrische Ansteuerung des Sperrventils SG in seiner Offenstellung, in der der Druck des Bremsdruckgebers 1 ungehindert in die Kammern 12 der Aktuatoren 5 gelangen kann, womit die Hubkolben 9 die Ventile 10 aufstoßen.

Um die gegenüber Atmosphäre offene hydraulische Verbindung der Aktuatoren 5 mit dem Druckmittelvorratsbehälter 11 zu vermeiden, kann zu diesem alternativ ein geschlossener Druckmittelvorratsbehälter in Form eines Niederdruckspeichers 11' verwendet werden. Diese alternative Verbindung ist gleichfalls strichliniert in Fig. 1 angedeutet. Um das Befüllen der Kammern 12 sicherzustellen, befindet sich parallel zum Magnetventil SO ein in Richtung der Kammern 12 öffnendes Rückschlagventil 14. Das Bauvolumen des Gehäuses 4 läßt sich bei einer Druckmittelversorgung der Hinterradbremsen HR, HL über ausschließlich einen einzigen zur Hinterachse führenden Bremskreis drastisch reduzieren, da über einen einzigen Aktuator 5 beide Hinterradbremsen mit dem Bremsdruckgeber 1 hydraulisch verbunden werden können.

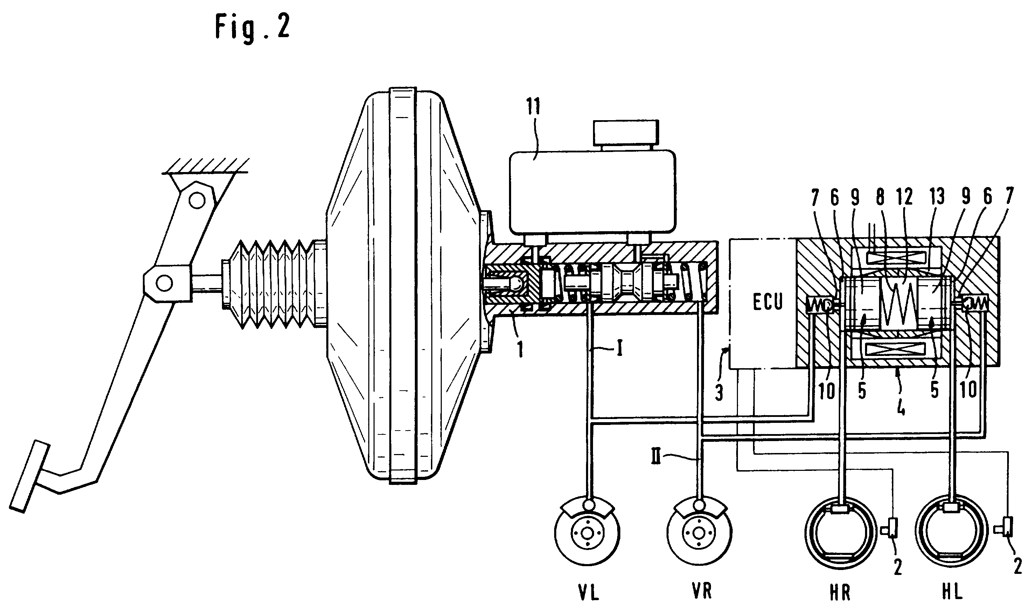

Eine weitere, zweckmäßige Ausgestaltung des Erfindungsgegenstandes geht aus Fig. 2 hervor. Abweichend von der Darstellung nach Fig. 1 wird in Fig. 2 ausschließlich eine Kammer 12 für eine Bremsanlage in Diagonalkreisaufteilung benötigt, da beide Hubkolben 9 in diametraler Anordnung innerhalb einer gemeinsam genutzten Gehäusebohrung geführt sind. Die Kammer 12 mit der nunmehr einzigen Druckfeder 8 befindet sich somit zwischen den beiden Hubkolben 9, wodurch sich eine besonders kompakte Bauweise ergibt. Um sowohl die hydraulische Verbindung vom Druckmittelvorratsbehälter 11 über ein Magnetventil zur Kammer 12 einzusparen als auch gegenüber Fig. 1 die Zweifachabdichtung jedes Hubkolbens 9 zu sparen, wird in Fig. 2 erfindungsgemäß vorgeschlagen, eine elektromechanisch betätigbare Blockiervorrichtung zu verwenden, die im vorgestellten Ausführungsbeispiel als reibschlüssige Bremse an den Mantelflächen der beiden Hubkolben 9 angreift. Soweit nicht auf alle Einzelheiten der in Fig. 2 dargestellten Konstruktion eingegangen wird, entsprechen diese dennoch in ihrem Wesen den zu Fig. 1 ausgeführten Erläuterungen zum Aufbau und zur Funktion der Bremsanlage. Als bauliches und funktionelles Unterscheidungsmerkmal des Gegenstandes nach Fig. 2 gegenüber Fig. 1 wird auf das Fehlen des in Fig. 1 vorgestellten Sperrventils SG verwiesen, womit sich bei einem beladenen Fahrzeug in bestimmten Situationen eine Unterbremsung der Hinterachse einstellen kann. Dies läßt sich jedoch aufgrund eines geeigneten Ansteuerverfahrens weitgehend vermeiden, indem bei einem Betrieb der Bremse auf Niedrigreibwerte an den Vorderradbremsen VL, VR keine Druckabbaumaßnahme an den Hinterradbremsen HR, HL zugelassen wird. Bei vorliegendem Ausführungsbeispiel nach Fig. 2 wäre sodann die Blockiervorrichtung aktiv,wodurch die Hubkolben 9 und Ventile 10 in einer abbildungsgemäßen Grundstellung verharren, die die hydraulische Verbindung zwischen dem Bremsdruckgeber 1 und den Hinterradbremsen HR,HL sicherstellt. Als weitere Gegenmaßnahme zur Verhinderung einer Unterbremsung der Hinterachse wird vorgeschlagen, die Drehzahlsignale der Vorderräder gestützt durch die jeweils ermittelte Referenzgeschwindigkeit zur Ansteuerung der Hinterradbremsen heranzuziehen. Als weitere Gegenmaßnahme zur Verhinderung einer Unterbremsung der Hinterachse wird ein verzögerter, eventuell nach dem "select-high" Prinzip verlaufender Druckabbau in den Hinterradbremsen gewählt, sofern die Vorderräder VL, VR blockieren.

### Bezugszeichenliste

- 1: Bremsdruckgeber
- 2: Sensor
- 3: Steuer- und Auswerteelektronik
- 4: Gehäuse
- 5: Aktuator
- 6: Speicherraum
- 7: Ventilsitz
- 8: Druckfeder
- 9: Hubkolben
- 10: Ventil
- 11: Druckmittelvorratsbehälter
- 12: Kammer
- 13: Blockiervorrichtung
- 14: Rückschlagventil

## Patentansprüche

1. Elektronisch gesteuerter Bremskraftverteiler für Kraftfahrzeuge, mit einem pedalbetätigten Bremsdruckgeber (1), an den Radbremsen (VL, VR, HR, HL)über Druckmittelleitungen angeschlossen sind, mit mindestens einem in den Druckmittelleitungen angeordneten Ventil (10), das in Abhängigkeit von der Fahrzeugverzögerung von einer ersten in eine zweite Position schaltet und das im Druckmittelweg zu den Hinterradbremsen (HR, HL) angeordnet ist, wobei zur Betätigung des Ventils (10) ein von einer Druckfeder (8) beaufschlagter Hubkolben (9) vorgesehen ist, desweiteren mit Sensoren (2)zur Ermittlung des individuellen Raddrehverhaltens und/oder entsprechenden Mittelwerten sowie mit einer Steuer- und Auswerteelektronik (3) zur Verknüpfung und Verarbeitung der Sensorsignale und zur Erzeugung von Steuersignalen, die zur Ansteuerung des Ventils (10) herangezogen werden und mit denen der Bremsdruck in den Hinterradbremsen (HR, HL) steuerbar ist, dadurch **gekennzeichnet**, daß in der Bremslösestellung ein Druckausgleich zwischen der Hinterradbremse (HR, HL) und dem Bremsdruckgeber (1) über das vom Hubkolben (9) in Grundstellung offen gehaltene Ventil (10) erfolgt,
daß Mittel (13; 12,SO) zur Blockierung des Hubkolbens (9) vorhanden sind, die bis zum Erreichen eines zulässigen Drehbeschleunigungsgrenzwertes an einem der Hinterräder (HL,HR) den Hubkolben (9) in einer Stellung blockieren, in der das Ventil (10) zur Anpassung des Hinterradbremsdrucks an das Niveau des Vorderradbremsdrucks seine offene Grundstellung aufweist,
und daß bei Betätigung des Bremsdruckgebers (1) das Ventil (10) von seiner offenen Grundstellung in eine die Hinterradbremse (HR, HL) vom Bremsdruckgeber (1) hydraulisch trennenden Position schaltet, in der zum Bremsdruckabbau die Hinterradbremse (HR; HL) ausschließ-lich mit einem dem Hubkolben (9) zugeordneten volumenerweiterten Speicherraum (6) hydraulisch verbunden ist, wenn die Drehbeschleunigung eines der Hinterräder den zulässigen Grenzwert überschreitet.

2. Bremskraftverteiler nach Anspruch 1, **dadurch gekennzeichnet**, daß der Hubkolben (9) auf der einen Kolbenstirnfläche vom Speicherraum (6) und auf der vom Speicherraum (6) abgewandten Kolbenstirnfläche von einer Kammer (12) begrenzt ist.

3. Bremskraftverteiler nach Anspruch 1 oder 2, **dadurch gekennzeichnet**, daß der Hubkolben (9) unter Wirkung einer Druckfeder (8) in einer Kammer (12) das Ventil (10) in der Offenstellung positioniert, in der es eine ungehinderte Druckmittelverbindung zwischen dem Bremsdruckgeber (1) und der Hinterradbremse (HR, HL) über den Speicherraum (6) herstellt.

4. Bremskraftverteiler nach Anspruch 1, **dadurch gekennzeichnet**, daß das Mittel zur Blockierung des Hubkolbens (9) eine Blockiervorrichtung bildet, die mit einer absperrbaren Kammer (12) versehen ist, die mittels eines in der Grundstellung offengeschalteten Magnetventils (SO) an einen Druckmittelvorratsbehälter (11) angeschlossen ist.

5. Bremskraftverteiler nach Anspruch 4, **dadurch gekennzeichnet**, daß die Kammer (12) mittels eines elektromagnetisch in Offenstellung schaltbaren Sperrventils (SG) an einem Bremsdruckgeber (1) hydraulisch angeschlossen ist.

6. Bremskraftverteiler nach Anspruch 1, **dadurch gekennzeichnet**, daß das Mittel zur Blockierung des Hubkolbens (9) eine Blockiervorrichtung (13) bildet, die aus einer reib- und/oder formschlüssigen, vorzugsweise elektromechanisch betätigbaren Bremse aufweist, die mit dem das Ventil (10) betätigenden Hubkolben (9) zusammenwirkt.

7. Bremskraftverteiler nach Anspruch 1, **dadurch gekennzeichnet**, daß das Ventil (10) als in Richtung der Hinterradbremse (HR, HL) sperrbares Rückschlagventil ausgeführt ist.

8. Bremskraftverteiler nach Anspruch 1, **dadurch gekennzeichnet**, daß bei einer diagonalen Bremskreisaufteilung den Hinterradbremsen (HR, HL) ein Aktuator (5) mit zwei parallel angeordneten Hubkolben (9) zugeordnet ist, der unzulässig hohe Bremsdrücke in den Hinterradbremsen (HR, HL) jeweils auf den Vorspanndruck der Druckfedern (8) reduziert, die sich auf den beiden Hubkolben (9) abstützen.

9. Bremskraftverteiler nach Anspruch 8, **dadurch gekennzeichnet**, daß der Vorspanndruck der Druckfeder (8) kleiner ist als ein aus der idealen Bremsdruckverteilerkennlinie eines leeren Kraftfahrzeugs resultierender Hinterachsbremsdruck.

## Claims

1. Electronically controlled brake force distributor for automotive vehicles, which includes a pedal-operated braking pressure generator (1) to which wheel brakes (VL, VR, HR, HL) are connected by way of pressure fluid lines, at least one valve (10) inserted into the pressure fluid lines, which switches from a first into a second position as a function of the vehicle deceleration and is arranged in the pressure fluid conduit to the rear-wheel brakes (HR, HL), wherein a stroke piston (9) acted upon by a compression spring (8) is provided to actuate the valve (10), sensors (2) to determine the individual wheel rotational behavior and/or corresponding average values, and a controlling and evaluating electronic unit (3) to combine and process the sensor signals and to generate control signals which are used to actuate the valve (10) and permit controlling the braking pressure in the rear-wheel brakes (HR, HL),
**characterized** in that in the brake release position pressure compensation occurs between the rear-wheel brake (HR, HL) and the braking pressure generator (1) by way of the valve (10) which is maintained open in the initial position by the stroke piston (9),
in that a means (13; 12, SO) is provided for blocking the stroke piston (9) which, until an admissible limit value of the rotational acceleration is reached on any one of the rear wheels (HL, HR), blocks the stroke piston (9) in a position in which the valve (10) adopts its open initial position to adapt the rear-wheel braking pressure to the level of the front-wheel braking pressure,
and in that upon actuation of the braking pressure generator (1) the valve (10) is switched from its open initial position to a position in which the rear-wheel brake (HR, HL) is separated hydraulically from the braking pressure generator (1), in which separating position the rear-wheel brake (HR; HL) for braking pressure reduction is hydraulically connected exclusively to an accumulator chamber (6), that is expanded in volume and associated with the stroke piston (9), as soon as the rotational acceleration of one of the rear wheels exceeds the admissible limit value.

2. Brake force distributor as claimed in claim 1,
**characterized** in that the stroke piston (9), on its one piston end surface is confined by the accumulator chamber (6), and the piston end surface remote from the accumulator chamber (6) is confined by a chamber (12).

3. Brake force distributor as claimed in claim 1 or claim 2,
**characterized** in that the stroke piston (9), by the action of a compression spring (8) in a chamber (12), makes the valve (10) adopt its open position where it establishes an unimpeded pressure fluid connection between the braking pressure generator (1) and the rear-wheel brake (HR, HL) by way of the accumulator chamber (6).

4. Brake force distributor as claimed in claim 1,
**characterized** in that the means for blocking the stroke piston (9) forms a blocking device which has a closable chamber (12) that is connected to a pressure fluid supply reservoir (11) by way of a magnetic valve (SO) switched open in its initial position.

5. Brake force distributor as claimed in claim 4,
**characterized** in that the chamber (12) is hydraulically connected to a braking pressure generator (1) by means of a shut-off valve (SG) which is adapted to be switched electromagnetically to its open position.

6. Brake force distributor as claimed in claim 1,
**characterized** in that the means for blocking the stroke piston (9) forms a blocking device (13) which includes a friction and/or form-locking brake, preferably operable electromechanically, that cooperates with a stroke piston (9) actuating the valve (10).

7. Brake force distributor as claimed in claim 1,
**characterized** in that the valve (10) is configured as a non-return valve adapted to close in the direction of the rear-wheel brake (HR, HL).

8. Brake force distributor as claimed in claim 1,
**characterized** in that associated with the rear-wheel brakes (HR, HL) in a diagonal brake circuit allotment is an actuator (5) with two parallel arranged stroke pistons (9), which actuator reduces inadmissibly high braking pressures in the rear-wheel brakes (HR, HL) to the respective preloading pressure of the compression springs (8) that are supported on the two stroke pistons (9).

9. Brake force distributor as claimed in claim 8,
**characterized** in that the preloading pressure of the compression spring (8) is lower than a rear-axle braking pressure which results from the ideal braking pressure distributor characteristic curve of an unloaded automotive vehicle.

## Revendications

1. Répartiteur de force de freinage à commande électronique, pour véhicule automobile, comprenant un générateur de pression de frein (1) actionné par pédale, auquel des freins de roue (VL, VR, HL, HR) sont raccordés par des conduites d'agent de pression, au moins une valve (10), qui est disposée dans les conduites d'agent de pression, commute d'une première à une seconde position en fonction de la décélération du véhicule et est disposée sur le trajet d'agent de pression menant aux freins de roue arrière (HR, HL), tandis qu'un piston à course déterminée (9) soumis à l'action d'un ressort de compression (8) est prévu pour l'actionnement de la valve (10), des capteurs (2), servant à déterminer le comportement individuel des roues en rotation et/ou des valeurs moyennes correspondantes, et une électronique de commande et d'analyse (3) servant à la combinaison logique et au traitement des signaux de capteur et à produire des signaux de commande auxquels il est fait appel pour commander la valve (10) et au moyen desquels la pression de frein dans les freins de roue arrière (HR, HL) peut être commandée, caractérisé en ce que, dans la position de relâchement du frein, une compensation de pression a lieu entre les freins de roue arrière (HR, HL) et le générateur de pression de frein (1) par l'intermédiaire de la valve (10) maintenue ouverte en position de base par le piston à course déterminée (9), en ce qu'il est prévu des moyens (13 ; 12, SO) de blocage du piston (9) qui, jusqu'à l'obtention d'une valeur limite admissible d'accélération angulaire sur l'une des roues arrière (HL, HR), bloque le piston (9) dans une position dans laquelle la valve (10) occupe sa position de base ouverte, en vue de l'adaptation de la pression de frein de roue arrière au niveau de la pression de frein de roue avant, et en ce que, lors d'un actionnement du générateur de pression de frein (1), la valve (10) commute de sa position de base ouverte dans une position qui isole hydrauliquement le frein de roue arrière (HR, HL) du générateur de pression de frein (1) et dans laquelle, pour la suppression de pression de frein, le frein de roue arrière (HR, HL) est relié hydrauliquement exclusivement à un espace d'accumulation (6), de volume agrandi, associé au piston à course déterminée (9), lorsque l'accélération angulaire de l'une des roues arrière franchit la valeur limite admissible.

2. Répartiteur de force de freinage suivant la revendication 1, caractérisé en ce que le piston à course déterminée (9) est délimité par l'espace d'accumulation (6) sur l'une des surfaces frontales du piston et par une chambre (12) sur la surface frontale du piston située à l'opposé de l'espace d'accumulation (6).

3. Répartiteur de force de freinage suivant la revendication 1 ou 2, caractérisé en ce que, sous l'action d'un ressort de compression (8) situé dans une chambre (12), le piston à course déterminée (9) positionne la valve (10) dans la position ouverte dans laquelle elle réalise une communication d'agent de pression sans obstacle entre le générateur de pression de frein (1) et le frein de roue arrière (HR, HL) par l'intermédiaire de l'espace d'accumulation (6).

4. Répartiteur de force de freinage suivant la revendication 1, caractérisé en ce que le moyen servant au blocage du piston à course déterminée (9) constitue un dispositif de blocage qui est pourvu d'une chambre (12) qui peut être bloquée et qui est raccordée à un réservoir d'agent de pression (11) au moyen d'une valve à électro-aimant (SO) commutée à l'état ouvert en position de base.

5. Répartiteur de force de freinage suivant la revendication 4, caractérisé en ce que la chambre (12) est raccordée hydrauliquement à un générateur de pression de frein (1) au moyen d'une valve de blocage (SG) pouvant être commutée en position d'ouverture par la voie électromagnétique.

6. Répartiteur de force de freinage suivant la revendication 1, caractérisé en ce que le moyen de blocage du piston à course déterminée (9) constitue un dispositif de blocage (13) qui est constitué d'un frein à friction et/ou à solidarisation par complémentarité de formes, de préférence à actionnement électromécanique, qui coopère avec le piston à course déterminée (9) actionnant la valve (10).

7. Répartiteur de force de freinage suivant la revendication 1, caractérisé en ce que la valve (10) est réalisée sous forme d'une valve antiretour pouvant être bloquée en direction du frein de roue arrière (HR, HL).

8. Répartiteur de force de freinage suivant la revendication 1, caractérisé en ce que, dans le cas d'une répartition diagonale des circuits de freinage, il est associé aux freins de roue arrière (HR, HL) un actionneur (5) qui comporte deux pistons à course déterminée (9) disposés en parallèle et qui réduit des pressions de frein d'un niveau inadmissible dans les freins de roue arrière (HR, HL) chaque fois à la pression de précontrainte des ressorts de compression (8) qui prennent appui sur les deux pistons à course déterminée (9).

9. Répartiteur de force de freinage suivant la revendication 8, caractérisé en ce que la pression de précontrainte du ressort de compression (8) est inférieure à une pression de frein d'essieu arrière résultant de la caractéristique idéale de répartiteur de pression de frein d'un véhicule automobile vide.
